# EUROPEAN PATENT APPLICATION

(11) **EP 4 748 719 A1**
(43) Date of publication of application: **27.05.2026**
(21) Application number: 24845956.2
(22) Date of filing: 19.07.2024
(51) Int. Cl.: B64F 1/222, E04H 6/44, F16H 1/22, B64F 1/22

(54) **VERTICAL TAKEOFF AND LANDING AIRFIELD TRANSPORTATION SYSTEM AND CONTROL METHOD THEREFOR**

(30) Priority: 21.07.2023 KR 20230095391; 11.12.2023 KR 20230178622; 21.03.2024 KR 20240039073
(71) Applicant: Hyundai Elevator Co., Ltd., Chungju-si, Chungcheongbuk-do 27329 (KR)
(72) Inventor: KIM, Hyun Goo, Chungju-si Chungcheongbuk-do 27329 (KR); SONG, Joon Hyun, Chungju-si Chungcheongbuk-do 27329 (KR)
(74) Representative: Splanemann
(86) International application number: PCT/KR2024/010475
(87) International publication number: WO 2025/023654

(57) **Abstract**

A vertiport transport system is disclosed. The vertiport transport system includes: a dual-worm shaft including a first worm and a second worm disposed opposite each other; a worm gear coupled between the first worm and the second worm; a vertically movable body supported by the worm gear and allowing an urban air mobility (UAM) aircraft to be loaded thereon; and a drive unit connected to the first worm and the second worm and rotating the first worm and the second worm in the same direction or in different directions.

## Description

### [Technical Field]

The present invention relates to a vertiport transport system and a method of controlling the same.

### [Background Art]

In response to demand for reduction of exhaust gas emissions to prevent global warming, the global urban air mobility (UAM) market is rapidly expanding.

That is, a revolution in the transportation sector and development of new technologies are required to reduce emissions from ground transportation, which account for about 16% of global carbon dioxide emissions. Furthermore, to address severe ground traffic congestion exacerbated by urban growth and the resulting degradation of the urban environment, it is necessary to build an urban air traffic system and integrate the same with the existing ground transportation system.

A vertiport, which is a specialized airport for takeoff and landing of UAM aircraft, may include a takeoff and landing area and a hangar.

In addition, UAM aircraft need to be moved between the takeoff and landing area and the hangar for charging and maintenance and may be repositioned within the hangar to meet their flight schedules.

However, there is a lack of specialized transport equipment for UAM aircraft. Therefore, there is a need for a transport system specially designed for UAM aircraft to ensure safety and efficient flight operation management.

### [Disclosure]

### [Technical Problem]

It is one aspect of the present invention to provide a vertiport transport system which can reduce load burden on a lift by implementing vertical and horizontal movement of the lift using a single drive unit, and a method of controlling the same.

It is another aspect of the present invention to provide a vertiport transport system in which a drive unit is disposed in a lower region of a vertiport to allow a lift configuration without obstructions caused by a machine room protruding above a landing area, and a method of controlling the same.

It is a further aspect of the present invention to provide a vertiport transport system which can provide simplified vertical and horizontal movement mechanisms, and a method of controlling the same.

### [Technical Solution]

In accordance with one aspect of the present invention, a vertiport transport system includes: a dual-worm shaft including a first worm and a second worm disposed opposite each other; a worm gear coupled between the first worm and the second worm; a vertically movable body supported by the worm gear and allowing an urban air mobility (UAM) aircraft to be loaded thereon; and a drive unit connected to the first worm and the second worm and rotating the first worm and the second worm in the same direction or in different directions.

The vertiport transport system may further include: a horizontally movable body coupled to the vertically movable body to be horizontally movable; and a horizontal interlocking unit configured to move the horizontally movable body in a horizontal direction, wherein the horizontal interlocking unit is coupled to the worm gear to be operated in conjunction with rotation of the worm gear.

The horizontal interlocking unit may include: a rotary shaft coupled to the worm gear; a pinion gear coupled to the rotary shaft; and a rack gear coupled to the horizontally movable body and meshed with the pinion gear.

The dual-worm shaft may include a first dual-worm shaft and a second dual-worm shaft, wherein the first dual-worm shaft may be disposed at one side of the vertically movable body, the second dual-worm shaft may be disposed at the other side of the vertically movable body, and the worm gears may be coupled to each of the first dual-worm shaft and the second dual-worm shaft.

The vertiport transport system may further include: a gear train transmitting torque from the drive unit to the dual-worm shaft, wherein the gear train may include a driving gear, a driven gear, a first interlocking gear, and a second interlocking gear set, wherein the driving gear may be coupled to the first worm, the driven gear may be coupled to the second worm, the first interlocking gear or the second interlocking gear set may be selectively connected to the driving gear and the driven gear, and the second interlocking gear set may include a pair of second interlocking gears meshed with each other.

The UAM aircraft may be loaded on the vertically movable body and the horizontally movable body, the vertically movable body may be vertically moved to a designated location with respect to each floor of a hangar by the drive unit, and the horizontally movable body may be moved forwards or backwards by the drive unit.

The vertiport transport system may further include: a guide unit configured to guide movement of the vertically movable body, wherein the vertically movable body may be formed with a support protrusion, the guide unit may be formed with a support groove corresponding to the support protrusion, and the support protrusion may be inserted into the support groove to be slidably movable in a vertical direction.

In accordance with another aspect of the present invention, a vertiport transport system includes: a takeoff and landing area located on a rooftop of a building; a multi-story hangar located on the rooftop of the building; and a transport device transporting an urban air mobility (UAM) aircraft between the takeoff and landing area and the hangar, wherein the transport device includes: a dual-worm shaft including a first worm and a second worm disposed opposite each other; a worm gear coupled between the first worm and the second worm; a vertically movable body supported by the worm gear and allowing the UAM aircraft to be loaded thereon; and a drive unit connected to the first worm and the second worm and rotating the first worm and the second worm in the same direction or in different directions.

The vertiport transport system may further include: a horizontally movable body coupled to the vertically movable body to be horizontally movable; and a horizontal interlocking unit configured to move the horizontally movable body in a horizontal direction, wherein the horizontal interlocking unit may be coupled to the worm gear to be operated in conjunction with rotation of the worm gear.

In accordance with a further aspect of the present invention, a method of controlling a vertiport transport system includes: a hangar confirmation step in which a floor of the hangar, on which an urban air mobility (UAM) aircraft is to be parked, is confirmed after the UAM aircraft is loaded on a vertically movable body; a vertical transport step in which a dual-worm shaft is actuated to vertically move the vertically movable body with the UAM aircraft loaded thereon; an in-position confirmation step in which it is confirmed whether the vertically movable body moved upwards or downwards in the vertical transport step is positioned at a designated location with respect to the corresponding floor of the hangar; and a horizontal transport step in which a horizontally movable body is horizontally moved toward the hangar, upon confirming in the in-position confirmation step that the vertically movable body is positioned at the designated location with respect to the corresponding floor of the hangar. In the vertical transport step, a pair of worms of the dual-worm shaft may be driven in the same direction.

In the horizontal transport step, a pair of worms of the dual-worm shaft may be driven in different directions.

### [Advantageous Effects]

Embodiments of the present invention provide a vertiport transport system that can implement both vertical movement and horizontal movement of a lift with a simple configuration.

Embodiments of the present invention provide a vertiport transport system that ensures improved space utilization of a vertiport and offers improved design flexibility.

Embodiments of the present invention provide a vertiport transport system that can transport urban air mobility (UAM) aircraft more rapidly and accurately.

Embodiments of the present invention provide a vertiport transport system that can ensure improved productivity by simplifying vertical and horizontal movement mechanisms and can contribute to carbon neutrality and ESG goals by minimizing component usage.

### [Description of Drawings]

FIG. 1 is a schematic view illustrating a technical idea and a first operational mode of a vertiport transportation system according to a first embodiment of the present invention.
FIG. 2 is a schematic view illustrating a second operational mode of the vertiport transportation system according to the first embodiment.
FIG. 3 is a schematic view illustrating a technical idea and a first operational mode of a vertiport transportation system according to a second embodiment of the present invention.
FIG. 4 is a schematic view illustrating a second operational mode of the vertiport transportation system according to the second embodiment.
FIG. 5 is a first schematic view illustrating a specific technical feature of a vertiport transport system according to one embodiment of the present invention.
FIG. 6 is a second schematic view illustrating a specific technical feature of the vertiport transportation system according to the embodiment.
FIG. 7 is a schematic view illustrating a first operational mode of the vertiport transportation system according to one embodiment of the present invention.
FIG. 8 is a schematic view illustrating a second operational mode of the vertiport transportation system according to one embodiment of the present invention.
FIG. 9 is a schematic flowchart illustrating a method of controlling the vertiport transport system according to one embodiment of the present invention.

### [Best Mode]

Hereinafter, embodiments of the present invention will be described in detail with reference to the accompanying drawings such that the present invention can be easily implemented by those skilled in the art. It should be understood that the present invention may be embodied in different ways and is not limited to the following embodiments.

In the drawings, portions irrelevant to the description will be omitted for clarity. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the invention described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of" depending on the context. The expression "configured (or set up) to" may not necessarily mean "specifically designed to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

A vertiport, which is a specialized airport for takeoff and landing of UAM aircraft, includes a takeoff area, a landing area, and a hangar.

Specifically, the vertiport may be constructed on the rooftop of a building.

In addition, the hangar of the vertiport may be configured as a multi-story structure, wherein the takeoff area and the landing area may be selectively located on the rooftop of the building or on the rooftop of the hangar.

An urban air mobility (UAM) aircraft is moved between the landing area, the hangar, and the takeoff area.

To this end, the UAM aircraft may be vertically moved between different floors of the hangar by a vertiport transport system.

The vertiport transportation system may include a plurality of lifts corresponding to the hangar. In addition, the vertiport transportation system may be provided with two lifts corresponding to different sizes of UAM aircraft.

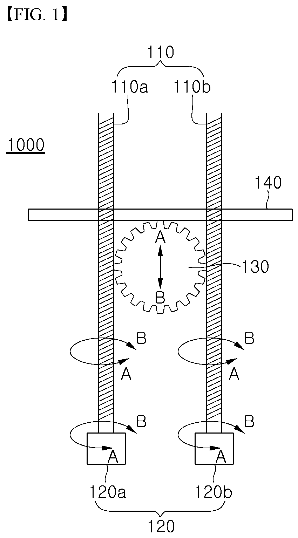

FIG. 1 is a schematic view illustrating a technical idea and a first operational mode of a vertiport transportation system according to a first embodiment of the present invention.

Specifically, the vertiport transport system 1000 includes a dual-worm shaft 110, a drive unit 120, a worm gear 130, and a movable support 140.

The dual-worm shaft 110 may include two worms: a first worm 110a and a second worm 110b.

The first worm 110a and the second worm 110b are disposed to be spaced apart from each other.

The worm gear 130 is disposed between the first worm 110a and the second worm 110b to be meshed with the two worms 110a, 110b.

The drive unit 120 may include a first drive unit 120a and a second drive unit 120b to actuate the first worm 110a and the second worm 110b, respectively.

The first drive unit 120a is coupled to the first worm 110a, and the second drive unit 120b is coupled to the second worm 110b.

The movable support 140 may be vertically moved while being supported by the worm gear 130.

The movable support 140 may be horizontally moved while being coupled to the worm gear 130.

That is, the movable support 140 may be moved forwards or backwards in a horizontal direction in conjunction with rotation of the first worm 110a and the second worm 110b.

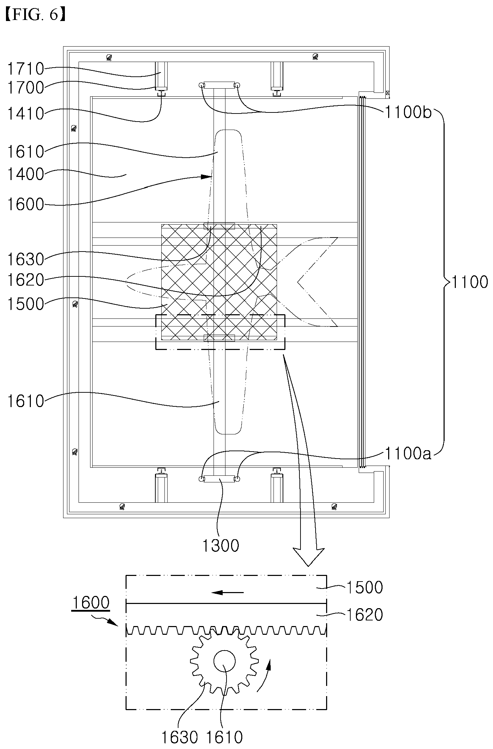

To this end, the movable support 140 may be coupled to a gear train (not shown) coupled to the worm gear 130. The gear train may include a pinion gear and a rack gear. Horizontal movement of the movable support 140 will be described in more detail with reference to FIG. 6 discussed further below.

Now, the operational mode of the vertiport transportation system 100 according to the first embodiment of the present invention will be described.

As shown in FIG. 1, when the first drive unit 120a and the second drive unit 120b are driven in the same direction, the worm gear 130 is moved upwards or downwards while being supported by the first worm 110a and the second worm 110b.

That is, when the first drive unit 120a and the second drive unit 120b are rotated in the clockwise direction B, the first worm 110a and the second worm 110b are rotated in the clockwise direction B and the worm gear 130 is moved downwards (B).

The movable support 140 is moved downwards while being supported by the worm gear 130.

When the first drive unit 120a and the second drive unit 120b are rotated in the counterclockwise direction A, the first worm 110a and the second worm 110b are rotated in the counterclockwise direction A and the worm gear 130 is moved upwards (A).

The movable support 140 is moved upwards while being supported by the worm gear 130.

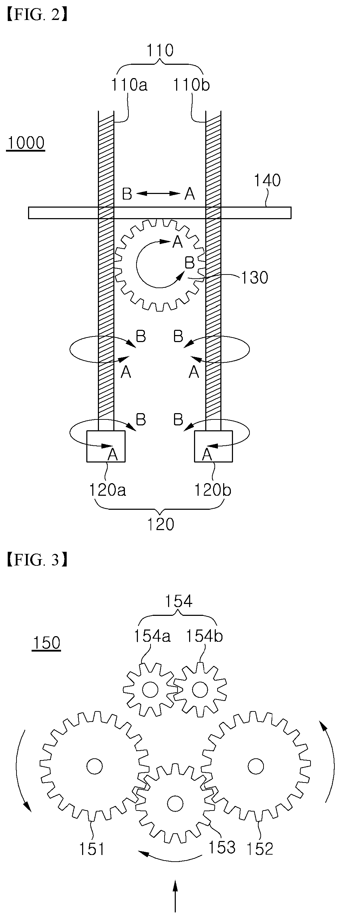

FIG. 2 is a schematic view illustrating a second operational mode of the vertiport transportation system according to the first embodiment of the present invention.

More specifically, FIG. 2 schematically illustrates another operational mode of the vertiport transportation system 100 of FIG. 1.

As shown in FIG. 2, when the first drive unit 120a and the second drive unit 120b are driven in opposite directions, the worm gear 130 is rotated while being meshed with the first worm 110a and the second worm 110b.

That is, when the first drive unit 120a is rotated in the clockwise direction B and the second drive unit 120b is rotated in the counterclockwise direction B, the first worm 110a is rotated in the clockwise direction B, the second worm 110b is rotated in the counterclockwise direction B, and the worm gear 130 is rotated in the counterclockwise direction B.

Here, the movable support 140 may be moved in one lateral direction (B) while being engaged with the worm gear 130.

When the first drive unit 120a is rotated in the counterclockwise direction A and the second drive unit 120b is rotated in the clockwise direction A, the first worm 110a is rotated in the counterclockwise direction A, the second worm 110b is rotated in the clockwise direction A, and the worm gear 130 is rotated in the clockwise direction A.

Here, the support movable body 140 may be moved in the other lateral direction (A) while being engaged with the worm gear 130.

FIG. 3 is a schematic view illustrating a technical idea of a vertiport transport system according to a second embodiment of the present invention.

The vertiport transport system of FIG. 3 only differs from the vertiport transport system of FIG. 1 in terms of a drive unit and a gear train structure.

More specifically, the vertiport transportation system according to the first embodiment (see FIG. 1) is configured such that two drive units each drive one worm, whereas the vertiport transportation system according to the second embodiment is configured such that one drive unit drives two worms through a gear train structure.

To this end, a gear train 150 includes a driving gear 151, a driven gear 152, a first interlocking gear 153, and a second interlocking gear set 154.

The driving gear 151 and the driven gear 152 are coupled to the first worm 110a (see FIG 1) and the second worm 110b (see FIG 1), respectively.

That is, the first worm 110a may be coupled to the driving gear 151, and the second worm 110b may be coupled to the driven gear 152.

In addition, the first interlocking gear 153 or the second interlocking gear set 154 may be selectively connected to the driving gear 151 and the driven gear 152.

That is, power from one drive unit (not shown) is provided to the driving gear 151, wherein the first interlocking gear 153 or the second interlocking gear set 154 may be operatively engaged with the drive unit through the driving gear 151, and the driven gear 152 may be operatively engaged with the drive unit through the first interlocking gear 153 or the second interlocking gear set 154.

The second interlocking gear set 154 includes a pair of second interlocking gears 154a, 154b meshed with each other.

Now, the operational mode of the vertiport transportation system according to the second embodiment will be described.

The first interlocking gear 153 is connected to the driving gear 151 and the driven gear 152.

When the driving gear 151 is rotated in the counterclockwise direction by the drive unit (not shown), the first interlocking gear 153 is rotated in the clockwise direction in conjunction with rotation of the driving gear 151, and the driven gear 152 is rotated in the counterclockwise direction in conjunction with rotation of the first interlocking gear 153.

Accordingly, the first worm 110a and the second worm 110b connected to the driving gear 151 and the driven gear 152, respectively, are rotated in the same direction.

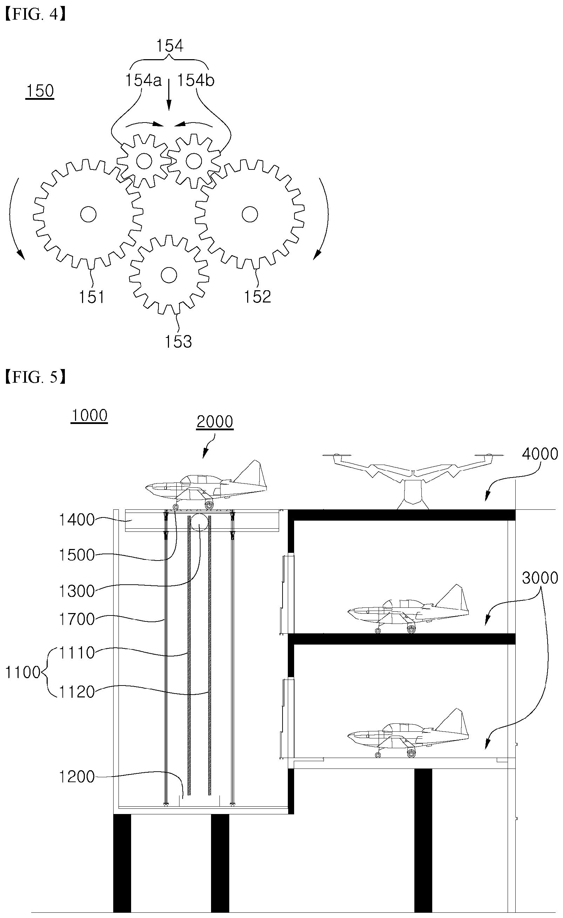

FIG. 4 is a schematic view illustrating a second operational mode of the vertiport transportation system according to the second embodiment.

The second interlocking gear set 154 is connected between the driving gear 151 and the driven gear 152.

That is, the one second interlocking gear 154a is coupled to the driving gear 151, and the other second interlocking gear 154b is coupled to the driven gear 152.

As the one second interlocking gear 154a is meshed with the other second interlocking gear 154b, driving force provided to the driving gear 151 is transmitted to the driven gear 152.

When the driving gear 151 is rotated in the counterclockwise direction by the drive unit (not shown), the one second interlocking gear 154a is rotated in the clockwise direction in conjunction with rotation of the driving gear 151, the other second interlocking gear 154b is rotated in the counterclockwise direction in conjunction with rotation of the one second interlocking gear 154a, and the driven gear 152 is rotated in the clockwise direction in conjunction with rotation of the other second interlocking gear 154b.

Accordingly, the first worm 110a and the second worm 110b connected to the driving gear 151 and the driven gear 152, respectively, are rotated in opposite directions.

With the configuration described above, the vertiport transport system according to the second embodiment can implement both vertical movement of a lift and horizontal movement of a support member using a single drive unit.

FIG. 5 is a first schematic view illustrating a specific technical feature of a vertiport transport system according to one embodiment of the present invention, and FIG. 6 is a second schematic view illustrating a specific technical feature of the vertiport transportation system according to the embodiment.

Referring to FIG. 5, the vertiport transportation system 1000 may move a UAM aircraft 2000 to a hangar 3000 when the UAM aircraft 2000 is positioned at a designated location with respect to each floor of the hangar 3000 by a vertically movable body 1400 described below,

The hangar 3000 of the vertiport may be configured as a multi-story structure, wherein a takeoff and landing area 4000 may be selectively located on the rooftop of a building or on the rooftop of the hangar.

The UAM aircraft 2000 is moved to the takeoff and landing area 4000 or the hangar 3000 by the vertiport transport system 1000.

The hangar 3000 may be configured as a multi-story structure.

Although the takeoff and landing area 4000 is shown as being located on the rooftop of the vertiport in this embodiment, it should be understood that the present invention is not limited thereto and a takeoff area and a landing area may be selectively located on the rooftop of the building or on the rooftop of the vertiport.

To this end, the vertiport transportation system 1000 includes a dual-worm shaft 1100, a drive unit 1200, a worm gear 1300, a vertically movable body 1400, a horizontally movable body 1500, and a horizontal interlocking unit 1600.

More specifically, the dual-worm shaft 1100 receives driving force from the drive unit 1200 and transmits the driving force to the worm gear 1300 to move the vertically movable body 1400 and the horizontally movable body 1500.

The dual-worm shaft 1100 includes a first worm 1110 and a second worm 1120.

In addition, the dual-worm shaft 1100 may include a first dual-worm shaft 1100a and a second dual-worm shaft 1100b.

The first dual-worm shaft 1100a may be coupled to one side of the vertically movable body 1400, and the second dual-worm shaft 1100b may be coupled to the other side of the vertically movable body 1400.

Each of the first dual-worm shaft 1100a and the second dual-worm shaft 1100b is coupled to a corresponding drive unit 1200. In addition, each of the first dual-worm shaft 1100a and the second dual-worm shaft 1100b is coupled to a corresponding worm gear 1300.

Here, the drive unit 1200 may include a plurality of motors and may be coupled to each of the first dual-worm shaft 1100a and the second dual-worm shaft 1100b.

That is, as shown in FIG. 1, two motors may be coupled to the first dual-worm shaft 1100a and two other motors may be coupled to the second dual-worm shaft 1100b.

In another embodiment, one motor may be coupled to the first dual-worm shaft 1100a and another motor may be coupled to the second dual-worm shaft 1100b.

Here, a gear train (indicated by 150 in FIG. 3) may be connected between the motor and the dual-worm shaft 1100.

The worm gear 1300 is coupled to each of the first dual-worm shaft 1100a and the second dual-worm shaft 1100b.

The worm gear 1300 is coupled to the vertically movable body 1400.

The horizontally movable body 1500 is coupled to the vertically movable body 1400 to be horizontally movable.

The vertiport transport system 1000 may further include a guide unit 1700. The guide unit 1700 guides upward/downward movement of the vertically movable body 1400.

To this end, the guide unit 1700 is supported to stand upright in the movement direction of the vertically movable body 1400, and the vertically movable body 1400 is supported to be movable by the guide unit 1700.

Referring to FIG. 6, the vertically movable body 1400 is formed with a support protrusion 1410, and the guide unit 1700 is formed with a support groove 1710 extending in the movement direction of the vertically movable body 1400 and corresponding to the support protrusion 1410, wherein the support protrusion 1410 is inserted into the support groove 1710 to be slidably movable in a vertical direction.

The horizontal interlocking unit 1600 is coupled to the worm gear 1300 and the horizontally movable body 1500 to move the horizontally movable body 1500 using driving force of the worm gear 1300.

To this end, the horizontal interlocking unit 1600 includes a rotary shaft 1610, a pinion gear 1630, and a rack gear 1620.

The rotary shaft 1610 is coupled to the worm gear 1300. Specifically, the rotary shaft 1610 may be coupled at one side thereof to the worm gear 1300 on the first dual-worm shaft 1100a side and may be coupled at the other side thereof to the worm gear 1300 on the second dual-worm shaft 1100b side.

The rack gear 1620 is coupled to a lower portion of the horizontally movable body 1500.

In addition, the rack gear 1620 may be coupled to both sides of the lower portion of the horizontally movable body 1500.

The pinion gear 1630 is coupled to the rotary shaft 1610 and is meshed with the rack gear 1620.

Accordingly, when the worm gear 1300 is rotated, the rotary shaft 1610 of the horizontal interlocking unit 1600 is rotated and the pinion gear 1630 is rotated in conjunction with rotation of the rotary shaft 1610.

The rack gear 1620 is moved in conjunction with rotation of the pinion gear 1630, and the horizontally movable body 1500 is horizontally moved by movement of the rack gear 1620.

That is, as shown in FIG. 6, when the rotary shaft 1610 is rotated in the counterclockwise direction, the horizontally movable body 1500 is moved forwards in a horizontal direction.

Conversely, when the rotary shaft 1610 is rotated in the clockwise direction, the horizontally movable body 1500 may be moved backwards in a horizontal direction.

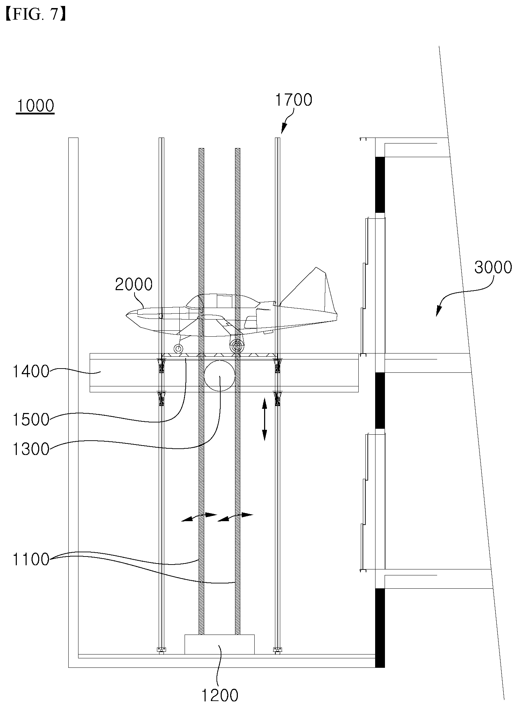

FIG. 7 is a schematic view illustrating a first operational mode of the vertiport transportation system according to one embodiment of the present invention.

Referring to FIG. 7, a UAM aircraft 2000 is loaded on the vertically movable body 1400 and the horizontally movable body 1500 of the vertiport transport system 1000. Then, the UAM aircraft 2000 is vertically moved to a designated location with respect to each floor of the hangar 3000 by the vertically movable body 1400.

To this end, the drive unit 1200 rotates the pair of worms of the dual-worm shaft 1100 in the same direction.

The dual-worm shaft 1100 moves the worm gear 1300 upwards or downwards, and the vertically movable body 1400 is moved upwards or downwards while being supported by the worm gear 1300.

Here, as described above with reference to FIG. 1 and FIG. 2, the dual-worm shaft is rotated in the clockwise direction or in the counterclockwise direction to move the worm gear 1300 downwards or upwards and thus to move the vertically movable body 1400 downwards or upwards.

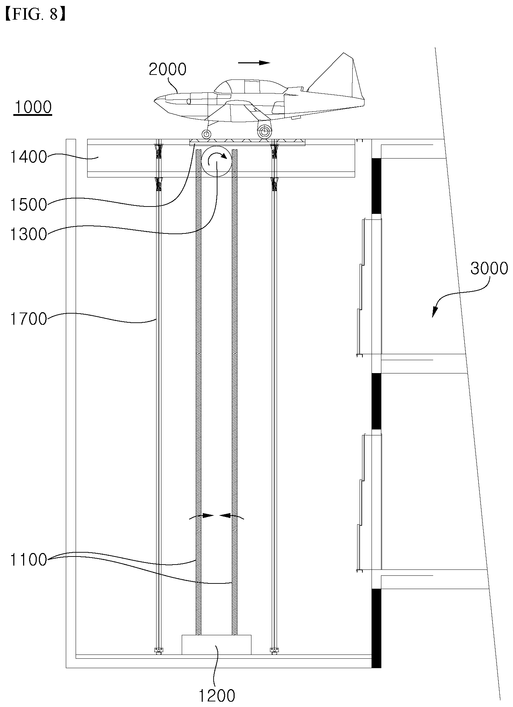

FIG. 8 is a schematic view illustrating a second operational mode of the vertiport transport system according to one embodiment of the present invention.

Referring to FIG. 8, when the vertically movable body 1400 is positioned at a designated location with respect to the hangar 3000, the horizontally movable body 1500 is horizontally moved to move the UAM aircraft 2000 into the hangar 3000.

To this end, the drive unit 1200 rotates the pair of worms of the dual-worm shaft 1100 in different directions.

The dual-worm shaft 1100 rotates the worm gear 1300. Then, the rotary shaft 1610 (see FIG. 6), the pinion gear 1630 (see FIG. 6), and the rack gear 1620 (see FIG. 6) of the horizontal interlocking unit 1600 (see FIG. 6) coupled to the worm gear 1300 are sequentially moved. Then, the horizontally movable body 1500 is moved backwards.

In addition, when the dual-worm shaft 1100 rotates the worm gear 1300 in the clockwise direction, the horizontally movable body 1500 is moved backwards. When the dual-worm shaft 1100 rotates the worm gear 1300 in the counterclockwise direction, the horizontally movable body 1500 is moved forwards.

As shown in FIG. 7 and FIG. 8, the UAM aircraft 2000 is moved upwards or downwards within the vertiport or is moved forwards or backwards relative to the hangar by the vertiport transport system 1000.

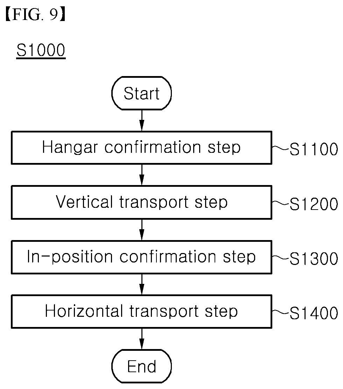

FIG. 9 is a schematic flowchart illustrating a method of controlling the vertiport transport system according to one embodiment of the present invention.

Referring to FIG. 9, the method S1000 of controlling the vertiport transport system includes: a hangar confirmation step S1100, a vertical transport step S1200, an in-position confirmation step S1300, and a horizontal transport step S1400.

More specifically, in the hangar confirmation step S1100, a floor of the hangar, on which a UAM aircraft 2000 is to be parked, is confirmed after the UAM aircraft 2000 is loaded on the vertically movable body 1400.

In the vertical transport step S1200, the dual-worm shaft 1100 is actuated to vertically move the vertically movable body 1400 with the UAM aircraft 2000 loaded thereon.

In the in-position confirmation step S1300, it is confirmed whether the vertically movable body 1400 moved upwards or downwards in the vertical transport step S1200 is positioned at a designated location with respect to the corresponding floor of the hangar 3000.

To implement the in-position confirmation step S1300, each floor of the hangar 3000 may be provided with a position sensor (not shown).

In the horizontal transport step S1400, the horizontally movable body 1500 is horizontally moved towards the hangar 3000, upon confirming in the in-position confirmation step S1300 that the vertically movable body 1400 is positioned at the designated location with respect to the corresponding floor of the hangar 3000.

The detailed configuration for horizontal movement of the horizontally movable body 1500 has been described above with reference to FIG. 6 and a detailed description thereof will be omitted herein.

While the preferred embodiments of the present invention have been described with reference to the drawings as above, it should be understood that the foregoing embodiments are provided for illustration only and are not to be in any way construed as limiting the present invention, and that various modifications, changes, alterations, and equivalent embodiments can be made by those skilled in the art without departing from the spirit and scope of the disclosure. For example, even when the invention described herein is performed in a different order than described herein and/or the components of the described systems, structures, devices, circuits, and the like are combined or assembled in a different form than described herein or are substituted or replaced by other components or equivalents thereto, suitable results can be achieved.

Therefore, other implementations, other embodiments, and equivalents to the appended claims fall within the scope of the claims.

## Claims

1. A vertiport transport system comprising:
a dual-worm shaft comprising a first worm and a second worm disposed opposite each other;
a worm gear coupled between the first worm and the second worm;
a vertically movable body supported by the worm gear and allowing an urban air mobility (UAM) aircraft to be loaded thereon; and
a drive unit connected to the first worm and the second worm and rotating the first worm and the second worm in the same direction or in different directions.

2. The vertiport transport system according to claim 1, further comprising:
a horizontally movable body coupled to the vertically movable body to be horizontally movable; and
a horizontal interlocking unit configured to move the horizontally movable body in a horizontal direction,
wherein the horizontal interlocking unit is coupled to the worm gear to be operated in conjunction with rotation of the worm gear.

3. The vertiport transport system according to claim 2, wherein the horizontal interlocking unit comprises:
a rotary shaft coupled to the worm gear;
a pinion gear coupled to the rotary shaft; and
a rack gear coupled to the horizontally movable body and meshed with the pinion gear.

4. The vertiport transport system according to claim 1, wherein
the dual-worm shaft comprises a first dual-worm shaft and a second dual-worm shaft,
the first dual-worm shaft being disposed at one side of the vertically movable body, the second dual-worm shaft being disposed at the other side of the vertically movable body; and
the worm gear is coupled to each of the first dual-worm shaft and the second dual-worm shaft.

5. The vertiport transport system according to claim 1, further comprising:
a gear train transmitting torque from the drive unit to the dual-worm shaft,
wherein the gear train comprises a driving gear, a driven gear, a first interlocking gear, and a second interlocking gear set,
the driving gear is coupled to the first worm,
the driven gear is coupled to the second worm,
the first interlocking gear or the second interlocking gear set are selectively connected to the driving gear and the driven gear, and
the second interlocking gear set comprises a pair of second interlocking gears meshed with each other.

6. The vertiport transport system according to claim 3, wherein
the UAM aircraft is loaded on the vertically movable body and the horizontally movable body;
the vertically movable body is vertically moved to a designated location with respect to each floor of a hangar by the drive unit, and
the horizontally movable body is moved forwards or backwards by the drive unit.

7. The vertiport transport system according to claim 3, further comprising:
a guide unit configured to guide movement of the vertically movable body,
wherein the vertically movable body is formed with a support protrusion and the guide unit is formed with a support groove corresponding to the support protrusion, the support protrusion being inserted into the support groove to be slidably movable in a vertical direction.

8. A vertiport transport system comprising:
a takeoff and landing area located on a rooftop of a building;
a multi-story hangar located on the rooftop of the building; and
a transport device transporting an urban air mobility (UAM) aircraft between the takeoff and landing area and the hangar,
wherein the transport device comprises:
a dual-worm shaft comprising a first worm and a second worm disposed opposite each other;
a worm gear coupled between the first worm and the second worm;
a vertically movable body supported by the worm gear and allowing the UAM aircraft to be loaded thereon; and
a drive unit connected to the first worm and the second worm and rotating the first worm and the second worm in the same direction or in different directions.

9. The vertiport transport system according to claim 8, further comprising:
a horizontally movable body coupled to the vertically movable body to be horizontally movable; and
a horizontal interlocking unit configured to move the horizontally movable body in a horizontal direction,
wherein the horizontal interlocking unit is coupled to the worm gear to be operated in conjunction with rotation of the worm gear.

10. A method of controlling a vertiport transport system, comprising:
a hangar confirmation step in which a floor of the hangar, on which an urban air mobility (UAM) aircraft is to be parked, is confirmed after the UAM aircraft is loaded on a vertically movable body;
a vertical transport step in which a dual-worm shaft is actuated to vertically move the vertically movable body with the UAM aircraft loaded thereon;
an in-position confirmation step in which it is confirmed whether the vertically movable body moved upwards or downwards in the vertical transport step is positioned at a designated location with respect to the corresponding floor of the hangar; and
a horizontal transport step in which a horizontally movable body is horizontally moved toward the hangar, upon confirming in the in-position confirmation step that the vertically movable body is positioned at the designated location with respect to the corresponding floor of the hangar.

11. The method according to claim 10, wherein, in the vertical transport step, a pair of worms of the dual-worm shaft is driven in the same direction.

12. The method according to claim 10, wherein, in the horizontal transport step, a pair of worms of the dual-worm shaft is driven in different directions.
